# EUROPEAN PATENT APPLICATION

(11) **EP 0 945 760 A1**
(43) Date of publication of application: **29.09.1999**
(21) Application number: 98200902.9
(22) Date of filing: 23.03.1998
(51) Int. Cl.: G03D 3/13, C09J 5/10

(54) **An arrangement and method for bonding a first component to a second component**

(71) Applicant: AGFA-GEVAERT N.V., 2640 Mortsel (BE)
(72) Inventor: Van Wijk, Jan, B-2640 Mortsel (BE); Van Schepdael, Ludo, B-3890 Gingelom (BE)

(57) **Abstract**

The first component (12) is bonded to the second component (14) by bonding material (52) positioned between surfaces (20, 22) of the components (12, 14). A chamber (18) is defined between the bonding surfaces (20, 22). The chamber is provided with an entrance (32) into the chamber (18) and an exit (46). Bonding material (52) in fluid form is introduced through the entrance (32) into the chamber (18) while allowing air to be expelled through the exit (46) until the chamber (18) is at least substantially full of the bonding material (52). The components are thereby securely bonded together in a reliable manner.

## Description

### FIELD OF THE INVENTION

This invention relates to an arrangement and method for bonding a first component to a second component by bonding material positioned between surfaces of the components, the method being particularly, but not exclusively, suitable for the bonding of end pieces to the core of a roller.

### BACKGROUND OF INVENTION

Rollers used in photographic sheet material processing machines, as well as in other applications, are often constructed with a rigid core having a covering of elastomeric material, end pieces being bonded to the core to enable the mounting of the roller in the machine. Such rollers are often used in pairs, rollers of each pair being biased towards each other to form a nip through which sheet material passes. The rollers may be partially or fully immersed in a treatment liquid. It may be important to ensure that the pressure exerted by the rollers on the sheet material, as the rollers rotate, is constant across the width of the sheet material. In theory, rollers can be constructed of such materials and in such dimensions as to ensure this uniform pressure. However, in practice, unless the bonding of the core to the end pieces is fully secure, some unpredictability in performance can arise. Usually a hardenable glue is used to bond the end pieces to the core, before the application of the elastomeric covering. The covering may be applied to the core by a method which involves heat treatment, at a temperature above the temperature at which the hardened glue begins to weaken. A weakness therefore arises in the bonding of the end pieces to the core, which weakness is unpredictable and not possible to cure, since after forming the covering over the core the joint between the end pieces and the core is inaccessible.

### OBJECTS OF INVENTION

It is an object of the present invention to provide an arrangement and a method of securely bonding components together in a more reliable manner.

### SUMMARY OF THE INVENTION

We have discovered that this objective, and other useful advantages, can be achieved by the provision of a chamber defined between the surfaces to be bonded, with an entrance into the chamber for the introduction of bonding material and an exit from the chamber for the expulsion of air from the chamber.

Thus, according to a first aspect of the invention, there is provided an arrangement for bonding a first component to a second component by bonding material positioned between surfaces of the components, characterized by a chamber defined between the surfaces, an entrance into the chamber for the introduction of bonding material in fluid form into the chamber, and an exit from the chamber for expelling air from the chamber.

According to a second aspect of the invention, there is provided a method of bonding a first component to a second component by the use of bonding material positioned between surfaces of the components, characterized by introducing bonding material in fluid form through an entrance into a chamber defined between the surfaces while allowing air to be expelled through an exit from the chamber until the chamber is at least substantially full of the bonding material.

The chamber is preferably defined, at least in part, by at least one spacing member positioned between the surfaces. The spacing member may be in the form of a flexible sealing member, carried by one component and positioned to be in contact with the other component. In another embodiment, the spacing member is integral with one of the components.

The chamber may be defined by first and second spacing members carried by one of the components and extending into contact with the other, the entrance opening into the chamber adjacent the first spacing member and the exit being constituted by a passage by-passing the second spacing member.

The entrance into the chamber may open from an inlet passage through at least one of the components.

Alternatively, it is possible in some embodiments of the invention for the entrance to be constituted by a passage through a spacing member carried by, or integral with, one component.

The chamber preferably has a generally elongate cross-section, the entrance being positioned adjacent one end of the chamber and the exit being positioned adjacent the opposite end of the chamber. This construction helps to ensure that substantially no air remains trapped in the chamber as the chamber is filled with bonding material. Any air remaining in the chamber reduces the surface area of the components in contact with the bonding material, thereby weakening the joint. Air in the chamber may also accelerate degradation of the bonding material.

The invention is especially applicable where the components are formed of materials having different thermal expansion coefficients. This is because when such components are subjected to significant increases in temperature, the differential thermal expansion introduces stress into the joint. While the present invention may not overcome the generation of such stress, by confining the bonding material to the limits of the chamber, any weakening of the joint is reduced. In an example, one of the components is formed of metal and the other is formed of a rigid non-metallic material.
Non-metallic materials which can be used include glass, ceramics, plastics (especially high temperature plastics) and composite materials such as carbon fibres or glass fibres embedded in resin. the material of which the components are formed may be porous or non-porous.

The invention is particularly applicable to the bonding of surfaces which are non-planar. However, the invention may also be successfully applied to the bonding of planar surfaces.

The invention is of particular benefit where one of the components is surrounded by the other, making the joint relatively inaccessible. For example, as in the case of bonding end pieces to the core of a roller, one of the components has a cylindrical cross-section and the other has an annular cross-section.

The chamber preferably comprises a constriction adjacent the exit. This constriction preferably reduces the width of the chamber sufficiently to cause turbulent flow in the glue, thereby to more fully expel air through the exit. Turbulent flow arises when the Reynolds number Rₑ is more than 2000, especially more than 3000. Thus the method of the invention may further comprise constricting the flow of the bonding material through the chamber from the entrance to the exit, most preferably to cause turbulent flow in the glue, thereby to more fully expel air through the exit.

A preferred embodiment of the invention is an arrangement for the bonding of a cylindrical component to an annular component by bonding material positioned between a radially outer surface of the cylindrical component and a radially inner surface of the annular component, wherein the chamber is an annular chamber defined between the curved surfaces, a passage through the cylindrical component leading to an entrance into the chamber adjacent one axial end thereof for the introduction of bonding material in fluid form into the chamber and an exit from the chamber adjacent the opposite axial end thereof for expelling air from the chamber. In this embodiment, the exit may be constituted by a space defined between an end face of the annular component and a flange of the cylindrical component. The first component is, for example, an end piece of a roller and the second component is a core of the roller.

The bonding material may be selected from hardenable adhesives, especially multi-component adhesives, where the adhesive components are mixed immediately before use and harden chemically.

The method according to the invention can be used for forming a roller by bonding at least one end piece to a core and thereafter providing the core with an elastomeric cover.

While in many applications, the success of the present invention may not be visible to the naked eye, due to the inaccessibility of the joint, the condition of the joint can usually be easily examined with the use of X-rays.

### DETAILED DESCRIPTION OF THE INVENTION

The invention will be described by the following illustrative embodiments with reference to the accompanying drawings without the intention to limit the invention thereto, and in which:
Figure 1 is an axial cross-sectional view of one end of a roller, components of which are to be bonded according to the invention;
Figure 2 is a view of the end piece of the roller shown in Figure 1;
Figure 3 is a cross-sectional view taken on the line III - III in Figure 1; and
Figure 4 is a cross-sectional view taken on the line IV - IV in Figure 3; and
Figure 5 is a view similar to Figure 1, of the roller after construction is complete; and
Figure 6 is a cross-sectional view of an alternative embodiment of the invention, where two plates are to be bonded together.

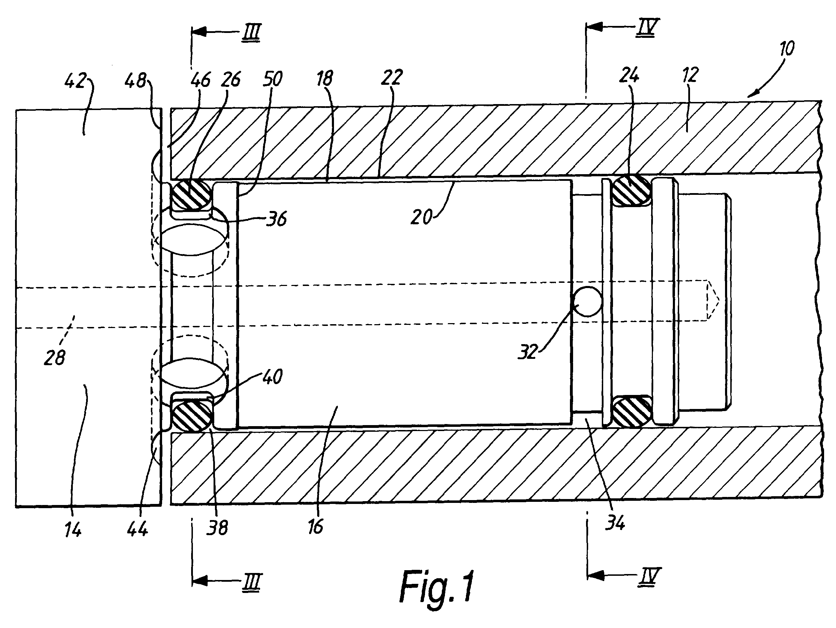

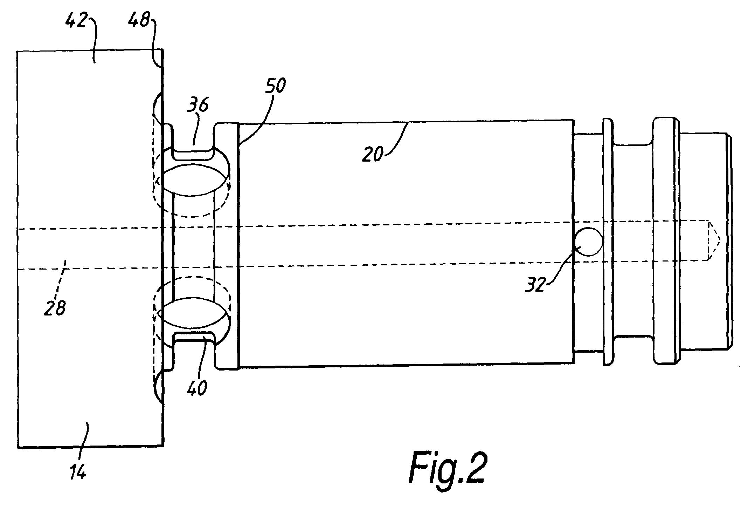

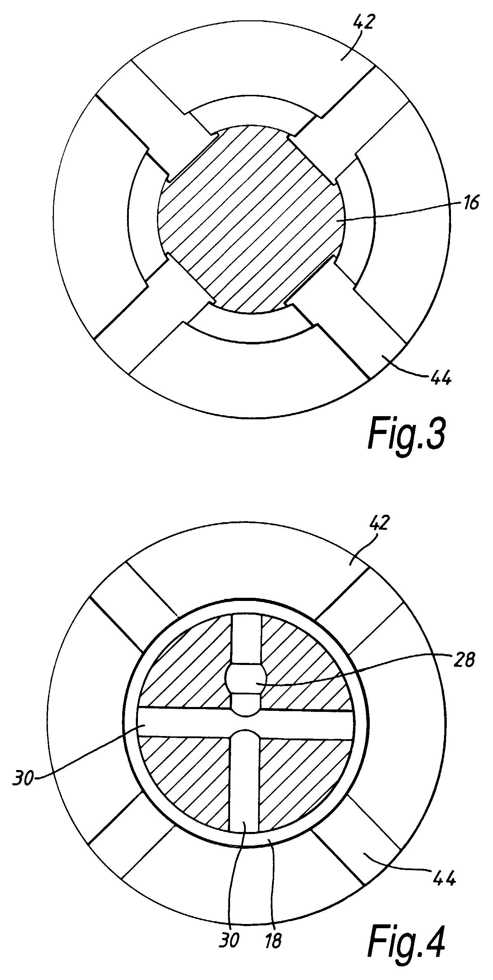

Figures 1 to 4 of the drawings show a roller 10 comprising a rigid core 12 having an annular cross-section formed of a non-metallic composite material (such as carbon fibres, or glass fibres, embedded in resin) which is to be bonded at each end to the shaft of a chrome-nickel alloy end piece 14. The end piece 14 and the core are thus formed of materials having different thermal expansion coefficients. The shaft 16 of the end piece 14 has a cylindrical cross-section with a diameter of approximately 26.8 mm and is surrounded by the core 12, the latter having an internal diameter of approximately 27.3 mm.
An annular chamber 18, with a maximum width of approximately 0.25 mm, is defined between the radially outer curved surface 20 of the end piece 14 and the radially inner curved surface 22 of the core 12. These surfaces 20, 22 are kept in spaced apart position by first and second flexible O-rings 24, 26 positioned between the surfaces 20, 22. The chamber 18 has a generally elongate axial cross-section.

A blind bore 28, having a diameter of approximately 4.5 mm, extends through the end piece 14 and connects with cross-borings 30, of diameter approximately 3.0 mm, leading to four entrance holes 32 into the chamber 18, positioned adjacent one end 34 of the chamber 18.

The second O-ring 26, which acts as a spacing member to define the chamber 18, is mounted in a cylindrical groove 36 in the end piece shaft 16. The groove 36, which is positioned adjacent the opposite end 38 of the chamber 18 to the entrance holes 32, is provided with under-borings 40, constituting passages by-passing the second O-ring 26. A flange 42 of the end piece 14 is provided with four ventilation holes 44, thereby enabling air and fluid glue to pass from the chamber 18 into an exit space 46 defined between an end face 48 of the core 12 and the end piece flange 42. The exit space 46 has a width of about 1.0 mm. Because of this 1.0 mm wide exit space, it is possible to monitor by visual inspection, the optimal distribution of the glue which flows from the under-borings 40 into the exit space 46.

The end piece shaft 16 has a portion 50 of increased diameter, approximately 27.1 mm, adjacent the exit space 46, which is of a size to reduce the width of the chamber 18 to approximately 0.1 mm, without closing it.

In order to bond the core 12 and the end piece 14 together, a pneumatic glue gun is used to introduce a pre-mixed two-component epoxy setting glue 52, such as Scotch-Weld (Trade Mark ex 3M) in fluid form through the blind bore 28 and the entrance holes 32 into the chamber 18. The first flexible O-ring 24 acts as a sealing member to prevent the glue escaping from the chamber 18 at this end thereof. As the glue is forced along the chamber 18, air is expelled from the exit space 46 until the chamber 18 is full of the glue 52 and the glue is seen to start escaping through the exit space 46. The increased diameter portion 50 acts as a flood-break or dam to constrict the flow of the glue 52 through the chamber 18 from the entrance 32 to the exit space 46, thereby to more fully expel air through the exit space 46.

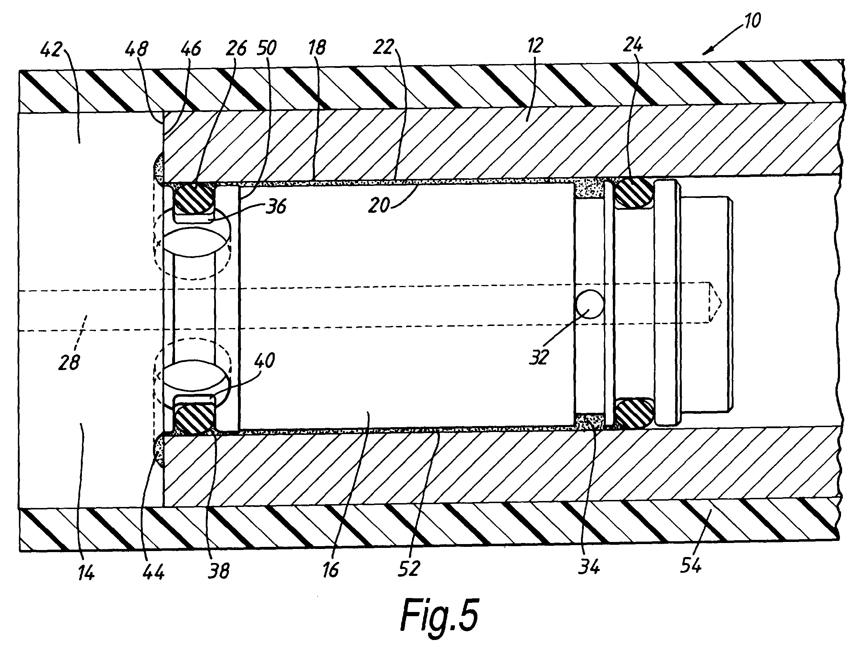

As shown in Figure 5, glue 52 is now positioned in the chamber 18 between the core 12 and the end piece 14.

After filling the chamber 18 with the glue, and before the latter is hardened by heat treatment, the core 12 is moved to bring the end face 48 against the flange 42, thereby closing the exit space 46. Thereafter, the core 12 is provided with an elastomeric cover 54, in an autoclave at a temperature above 150°C.

In an improved method of bonding the core 12 to the end piece 14, the following steps may be adopted. After pushing the shaft 16 with its two assembled O-rings 24, 26, into the composite material core 12, so that there is an exit space 46 of 1.0 mm between the end piece flange 42 and the core 12, but before the glue is injected, the exit space 46 is temporarily covered by a strip of transparent flexible self-adhesive tape, such as MIRAGE, type 122 000 (trade Mark), having a width of e.g. 19 mm. The ends of the tape are overlapped. An additional ventilation hole is now pierced in the tape with a sharp object, at a location adjacent one of the four ventilation holes 44. The glue is then injected, as described previously, until the glue first begins to appear through the hole made in the transparent tape. the hole in the tape is then covered, for example with a finger of a gloved hand, while the glue injection continues. The filling of the exit space 46 by the glue can now be monitored visually through the transparent tape. As soon as the exit space 46 is entirely filled with glue, the ventilation hole in the tape is uncovered and glue injection continues until glue is seen to flow out of the ventilation hole in the tape. Glue injection then ceases, the self-adhesive tape is removed and discarded, and the shaft 14 is pushed further into the composite material core 12 until the end piece flange 42 touches the front of the core 12.

It should be noted that the dimensions referred to herein are merely illustrative, and do not limit the invention. They serve to illustrate however that the width of the chamber 18 may be small compared with the other dimensions of the components. The narrowest width of the chamber 18, as determined by the portion 50 of increased diameter, is ideally so low in relation to the viscosity of the glue as to generate turbulent flow as the glue passes along the chamber.

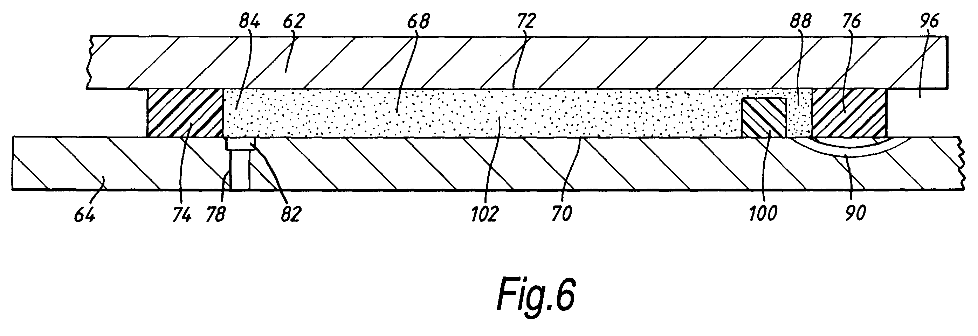

Figures 6 of the drawings show a first plate 62 formed for example of a non-metallic composite material which is to be bonded to a metallic second plate 64. The second plate 64 and the first plate are formed of materials having different thermal expansion coefficients. A chamber 68 is defined between a planar surface 70 of the second plate 64 and a planar surface 72 of the first plate 62. These surfaces 70, 72 are kept in spaced apart position by first and second flexible spacers 74, 76 carried on the first plate 62 and extending into contact with the second plate 64, and formed for example of a closed cell foam material. The chamber 68 has a generally elongate cross-section.

A bore 78 extends through the second plate 64 and leads to an entrance groove 82 into the chamber 68, positioned adjacent one end 84 of the chamber 68.

The second plate 64 is provided with under-borings 90 at the opposite end 88 of the chamber 68 to constitute an exit to the chamber 68, the under-borings 90 constituting passages by-passing the second spacer 76, enabling air and fluid glue to pass from the chamber 68 into an exit space 96 defined between first and second plates 62, 64.

The second plate 64 is provided with a wall 100, also formed of a closed cell foam extending into the chamber 68 adjacent the second spacer 76, which wall is of a height to reduce the width of the chamber 68 without closing it.

In order to bond the first plate 62 and the second plate 64 together, a pneumatic glue gun is used to introduce heat setting glue 102 in fluid form through the blind bore 78 and the entrance groove 82 into the chamber 68. The first spacer 74 acts as a sealing member to prevent the glue escaping from the chamber 68 at this end thereof. As the glue is forced along the chamber 68, air is expelled from the exit space 96 until the chamber 68 is full of the glue 102 and the glue is seen to start escaping through the exit space 96. The wall 100 acts as a flood-break or dam to constrict the flow of the glue 102 through the chamber 68 from the entrance 82 to the exit space 96, thereby to more fully expel air through the exit space 96. Glue 102 is now positioned in the chamber 68 between the first plate 62 and the second plate 64 and may now be hardened by heat treatment.

### Reference Number List

roller 10
core 12
end piece 14
shaft 16
chamber 18
outer curved surface 20
inner curved surface 22
first flexible O-ring 24
second flexible O-ring 26
blind bore 28
cross-borings 30
entrance holes 32
one end 34
cylindrical groove 36
opposite end 38
under-borings 40
end piece flange 42
ventilation holes 44
exit space 46
end face 48
portion 50
heat setting glue 52
elastomeric cover 54
first plate 62
second plate 64
chamber 68
planar surface 70
planar surface 72
first flexible spacer 74
second flexible spacer 76
bore 78
entrance groove 82
one end 84
opposite end 88
under-borings 90
exit space 96
wall 100
glue 102

## Claims

1. An arrangement for bonding a first component (12, 62) to a second component (14, 64) by bonding material (52, 102) positioned between surfaces (20, 70, 22, 72) of said components (12, 62, 14, 64), characterised by a chamber (18, 68) defined between said surfaces (20, 70, 22, 72), an entrance (32, 82) into said chamber (18, 68) for the introduction of bonding material (52, 102) in fluid form into said chamber (18, 68), and an exit (46, 96) from said chamber (18, 68) for expelling air from said chamber (18, 68).

2. An arrangement according to claim 1, wherein said chamber (18, 68) is defined, at least in part, by at least one spacing member (24, 74, 26, 76) positioned between said surfaces (20, 70, 22, 72).

3. An arrangement according to claim 2, wherein said chamber (18, 68) is defined by first and second spacing members (24, 74, 26, 76) carried by one of said components and extending into contact with the other of said components, said entrance (32, 82) opening into said chamber (18, 68) adjacent said first spacing member (24, 74) and said exit being constituted by a passage (40, 90) by-passing said second spacing member (26, 76).

4. An arrangement according to any preceding claim, wherein said entrance (32, 82) opens from an inlet passage (28, 78) through one of said components (12, 62, 14, 64).

5. An arrangement according to any preceding claim, wherein said chamber (18, 68) has a generally elongate cross-section, said entrance (32, 82) being positioned adjacent one end (34, 84) of said chamber (18, 68) and said exit (46, 96) being positioned adjacent the opposite end (38, 88) of said chamber (18, 68).

6. An arrangement according to any preceding claim, wherein said chamber (18, 68) comprises a constriction (50, 100) adjacent said exit (46, 96).

7. An arrangement according to any preceding claim, wherein said first component is a core (12) of a roller (10) and said second component is an end piece (14) of said roller.

8. A method of bonding a first component (12, 62) to a second component (14, 64) by the use of bonding material (52, 102) positioned between surfaces (20, 70, 22, 72) of said components, characterised by introducing bonding material (52, 102) in-fluid form through an entrance (32, 82) into a chamber (18, 68) defined between said surfaces (20, 70, 22, 72) while allowing air to be expelled through an exit (46, 96) from said chamber (18, 68) until said chamber (18, 68) is at least substantially full of said bonding material (52, 102).

9. A method according to claim 8, further comprising constricting the flow of said bonding material (52, 102) through said chamber (18, 68) from said entrance (32, 82) to said exit (46, 96), thereby to more fully expel air through said exit (46, 96).

10. A method for forming a roller (10) comprising bonding at least one end piece (14) to a core (12) using the method according to claim 8, and thereafter providing said core (12) with an elastomeric covering (54).
